# EUROPÄISCHE PATENTSCHRIFT

(11) **EP 0 848 897 B1**
(45) Veröffentlichungstag und Bekanntmachung des Hinweises auf die Patenterteilung: **24.10.2001**
(21) Anmeldenummer: 97121960.5
(22) Anmeldetag: 12.12.1997
(51) Int. Cl.: A01C 23/00, B05B 1/26

(54) **Flüssigkeitsverteiler, insbesondere Flüssigmistverteiler**
Spreading device for liquids, in particular spreading device for liquid manure
Dispositif d'épandage de liquides,spécialement dispositif de distribution de lisier

(30) Priorität: 17.12.1996 DE 19652373
(43) Veröffentlichungstag der Anmeldung: 24.06.1998
(73) Patentinhaber: Marchner, Siegfried, 84543 Winhöring (DE)
(72) Erfinder: Marchner, Siegfried, 84543 Winhöring (DE)
(74) Vertreter: Hano, Christian, Dipl.-Ing.

(56) Entgegenhaltungen:
- BE-A- 887 058
- DE-A- 2 542 559
- DE-A- 3 322 354

## Beschreibung

Die Erfindung betrifft einen Flüssigkeitsverteiler, insbesondere Flüssigmistverteiler, der im Anschluß an eine im wesentlichen horizontal gerichtete Ausmündung eines fahrbaren Flüssigkeitsbehälters, insbesondere Güllebehälters, an einer behälterfesten Montagefläche montierbar ist, mit einer Prallplatte, die von der unter Druck aus der Ausmündung austretenden Flüssigkeit beaufschlagt ist, und einer Abschirmplatte, die im wesentlichen parallel zur Prallplatte dieser mit Abstand gegenüberliegt, wobei die Prallplatte gemeinsam mit der Abschirmplatte zur Veränderung der Breite des gegen den Boden gerichteten Flüssigkeitsstrahls um eine horizontale, quer zur Richtung des aus der Ausmündung austretenden Strahls verlaufende Schwenkachse verstellbar ist.

Die Erfindung betrifft außerdem ein mit dem Flüssigkeitsverteiler ausgestattes Güllefahrzeug.

Ein solcher, aus der FR 21 68 630 bekannter Flüssigkeitsverteiler dient zum Ausbringen von Gülle auf eine landwirtschaftliche Nutzfläche die streifenweise befahren wird, wobei die Gülle aus dem Flüssigkeitsbehälter mittels des Flüssigkeitsverteilers möglichst parallel zum Boden in einem breiten Flüssigkeitsstrahl abgegeben wird, dessen Breite durch die Prallplatte bestimmt wird, die hinter der Ausmündung angeordnet ist und die eine verstellbare Neigung aufweist, durch die der Strahl nach unten abgelenkt wird. Die Prallplatte kann zusammen mit der Abschirmplatte verschwenkt werden, wodurch die Breite des auf den Boden auftreffenden Strahls etwas variiert werden kann, wenn auch nur in relativ engen Grenzen und relativ ungenau, jedoch mit einigermaßen homogener Massenverteilung. Insbesondere bei schmalen Flächen besteht deshalb die Möglichkeit, daß angrenzende Flächen in unerwünschter Weise von dem ausgebrachten Strahl erfaßt werden, oder daß die beiden letzten, parallelen Streifen einander mehr oder weniger überlappen müssen, wodurch die Gülledichte in dem Überlappungsbereich verdoppelt wird.

Aus ökologischen Gründen ist der zulässige Gülleeintrag in das Gelände beschränkt, weshalb solche Überlappungsbereiche oder auch auf andere Weise entstehende Flächen mit hoher Güllekonzentration ebenso vermieden werden sollten, wie ein Gülleeintrag in dafür nicht vorgesehene Flächen, wie Nachbargrundstücke, Verkehrswege oder Gewässer.

Ein Flüssigkeitsverteiler gemäß Oberbegriff des Anspruchs 1 ist in DE 33 22 354 A offenbart.

Um diesen Anforderungen entsprechen zu können, liegt der Erfindung die Aufgabe zugrunde, einen Flüssigkeitsverteiler zu schaffen, der geeignet ist, mit relativ einfachen, robusten und zuverlässigen Mitteln jederzeit unter Beibehaltung einer gleichmäßigen Flüssigkeitskonzentration die Breite des Flüssigkeitsstrahls in weiten Grenzen auf einen jeweils gewünschten Wert einzustellen.

Diese Aufgabe wird durch einen Flüssigkeitsverteiler mit den Merkmalen des Patentanspruchs 1 gelöst. Vorteilhafte Ausgestaltungen des erfindungsgemäßen Flüssigkeitsverteilers sind Gegenstand der Patentansprüche 2 bis 9. Ein mit dem erfindungsgemäßen Flüssigkeitsverteiler ausgestattetes Güllefahrzeug ist Gegenstand des Patentanspruchs 10.

Durch Einstellen der Strahlbegrenzungsvorrichtung des erfindungsgemäßen Flüssigkeitsverteilers werden die Strahlen, die eine gewünschte Strahlbreite überschreiten würden, nach unten umgelenkt, was mit zunehmender Beschränkung der Strahlbreite zu einer zunehmenden Konzentration der Flüssigkeit in den Randbereichen des auf dem Boden auftreffenden Strahls führen würde. Durch angepaßte Einstellung der Schrägstellung der Prallplatte und der Abschirmplatte wird diesem Effekt entgegengewirkt. Es ist somit möglich, die Breite eines homogen verteilten Flüssigkeitsstrahls auf einfache Weise einzustellen.

Der Flüssigkeitsverteiler ist insbesondere als Flüssigmistverteiler geeignet, der an einem Gülletransportbehälter angeordnet werden kann.

Besonders vorteilhaft ist es, wenn nach einer bevorzugten Ausgestaltung zwischen der Prallplatte und der Strahlbegrenzungsvorrichtung eine Getriebeverbindung besteht, nach deren Bewegungsgesetz die Unterkante der Prallplatte durch Schwenkung um die horizontale, quer zur Strahlrichtung verlaufende Achse ihren Abstand von dem der Mündung zugewandten Ende der Vorrichtung vergrößert, wenn die Strahlbegrenzungsvorrichtung sich senkt, und diesen Abstand verringert, wenn die Strahlbegrenzungsvorrichtung sich hebt, wobei vorzugsweise die Relativlage von Prallplatte und Strahlbegrenzungsvorrichtung, bei einer gegebenen Position der Prallplatte, zueinander einstellbar ist.

Dadurch kann mit einer einzigen Stellbewegung die jeweils optimale Einstellung der Vorrichtung erreicht werden.

Ein Ausführungsbeispiel der Erfindung wird nachstehend anhand von Zeichnungen näher erläutert. Es zeigt:

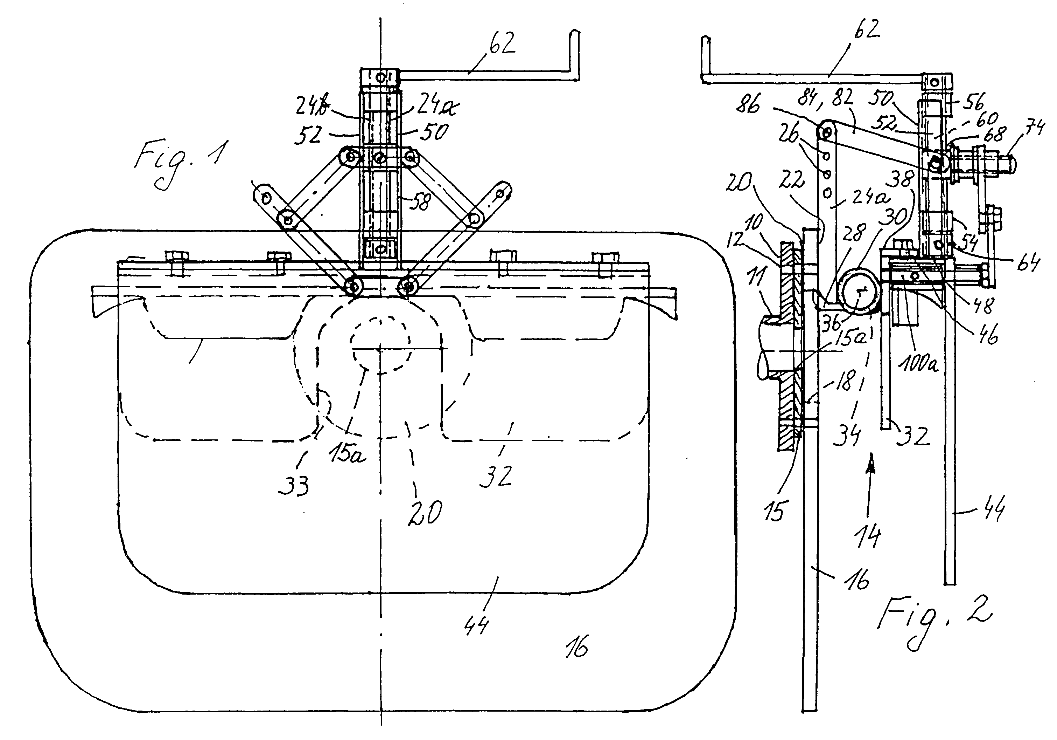

- Fig. 1: einen hinter der Ausmündung eines Güllebehälters angeordneten Flüssigmistverteiler,
- Fig. 2: eine Seitenansicht von Fig. 1,
- Fig. 3: eine Basisplatte des Flüssigmistverteilers gesehen in der Betrachtungsrichtung der Fig. 1,

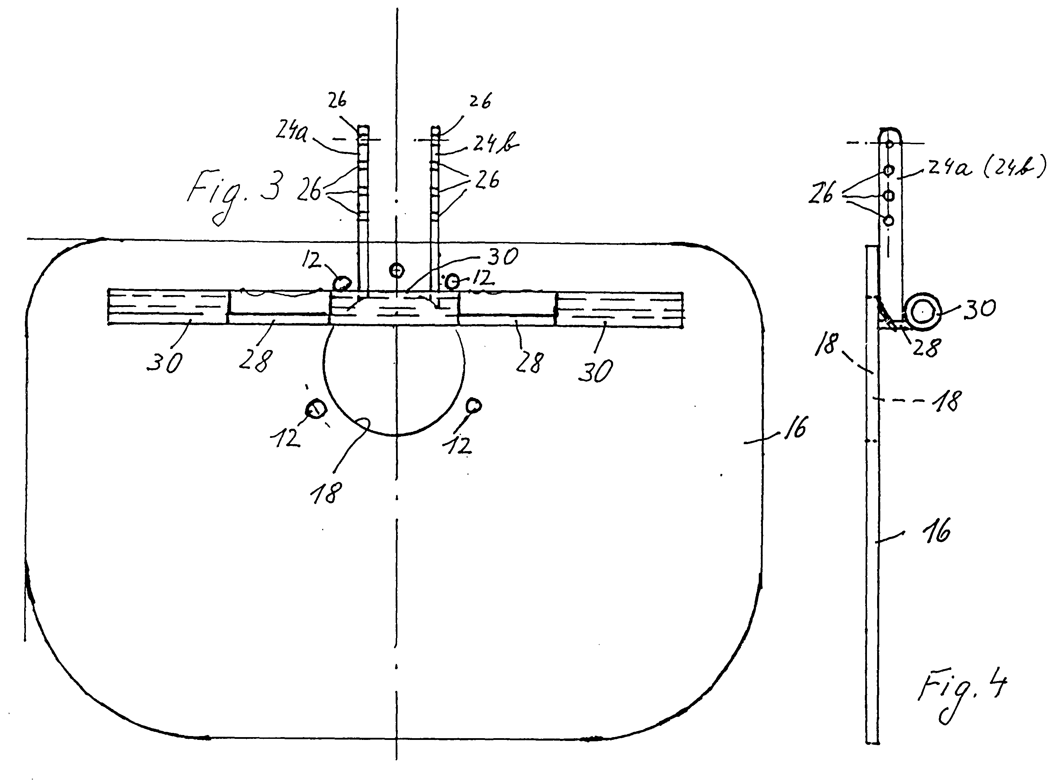

- Fig. 4: eine Seitenansicht von Fig. 3,
- Fig. 5: eine Abschirmplatte gesehen in der Betrachtungsrichtung der Fig. 1,
- Fig. 6: eine Seitenansicht von Fig. 5,

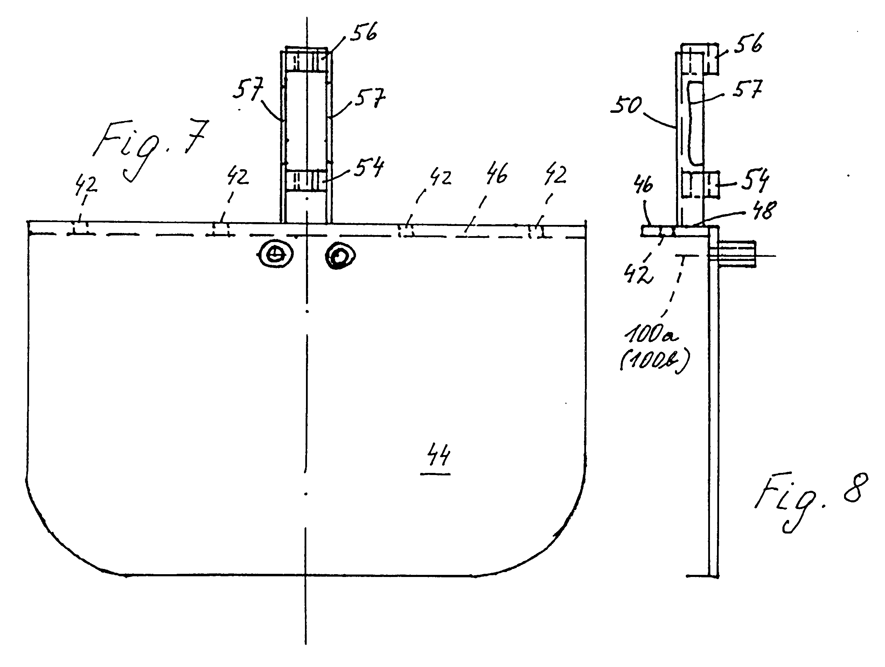

- Fig. 7: eine Prallplatte gesehen in der Betrachtungsrichtung der Fig. 1,
- Fig. 8: eine Seitenansicht von Fig. 7.

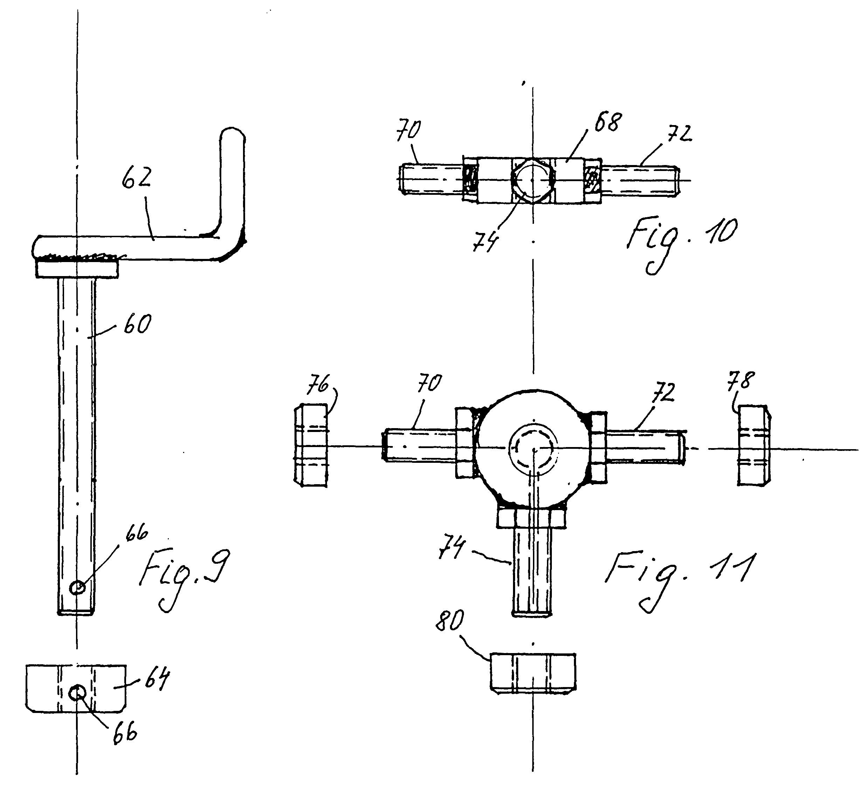

- Fig. 9: eine Gewindespindel mit Handkurbel und einer Sicherungsmutter,
- Fig. 10: eine der Gewindespindel von Fig. 9 zugeordnete Stellmutter in der Betrachtungsrichtung der Fig. 1,
- Fig. 11: eine Draufsicht auf die Stellmutter von Fig. 10 und drei ihr zugeordnete Sicherungsmuttern,
- Fig. 12: ein Lenkersystems in der Betrachtungsrichtung der Fig. 1,

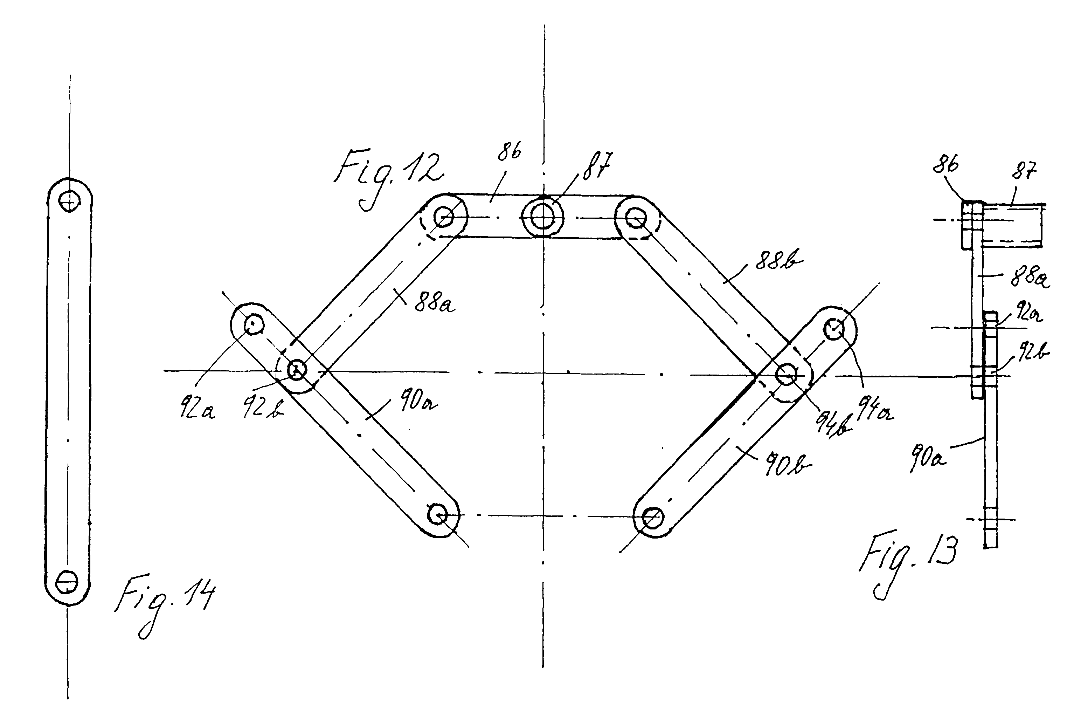

- Fig. 13: eine Seitenansicht von Fig. 12,
- Fig. 14: einen Lenker zur Winkelverstellung der Prallplatte und
- Fig. 15: zwei spiegelbildlich ausgeführte Strahlbegrenzer in der Betrachtungsrichtung der Fig. 1.

In Fig. 2 bezeichnet 10 einen im Mündungsbereich eines Ausflußrohres 11 eines nicht dargestellten fahrbaren Behälters, wie etwa eines Gülletransportbehälters eines Güllefahrzeugs, vorzugsweise in etwa vertikaler, bezüglich des Behälters fester Lage angebrachten und mit Bohrungen 12 versehenen Befestigungsflansch, an dem der insgesamt mit 14 bezeichnete erfindungsgemäße Flüssigkeitsverteiler unter Zwischenschaltung einer die Ausmündung 15a des austretenden Flüssigkeitsstrahls begrenzenden Dichtungsplatte 15 mittels einer Basisplatte 16 durch Schrauben befestigbar ist.

Die Basisplatte 16 weist eine dem Mündungsbereich des Behälters zugeordnete Durchbrechung 18 auf, deren Querschnitt größer ist als der Öffnungsquerschnitt im Befestigungsflansch 10. Die zur Anlage am Befestigungsflansch 10 bestimmt Oberfläche der Basisplatte 16 ist mit 20 bezeichnet. Oberhalb der Durchbrechung 18 sind mit der von der Oberfläche 20 abgewandten Fläche 22 der Basisplatte 16 zwei zueinander parallele, in vertikaler Richtung verlaufende, flanschartige Leisten 24a und 24b verbunden, die mit horizontalem Abstand voneinander angeordnet und mit einer Anzahl von mit vertikalem Abstand übereinander angeordneten, in beiden Leisten 24a und 24b einander deckungsgleich zugeordneten Bohrungen 26 versehen sind, deren Achsen horizontal und parallel zu den Oberflächen 20 und 22 verlaufen. Im Bereich des unteren Endes der Leisten 24a und 24b ist mit der Basisplatte 16 eine horizontale Leiste 28 verbunden, die zur Befestigung von Lagerhülsen 30 dient, die längs einer horizontalen, parallel zu den Oberflächen 20 und 22 verlaufenden Achse koaxial zueinander angeordnet sind.

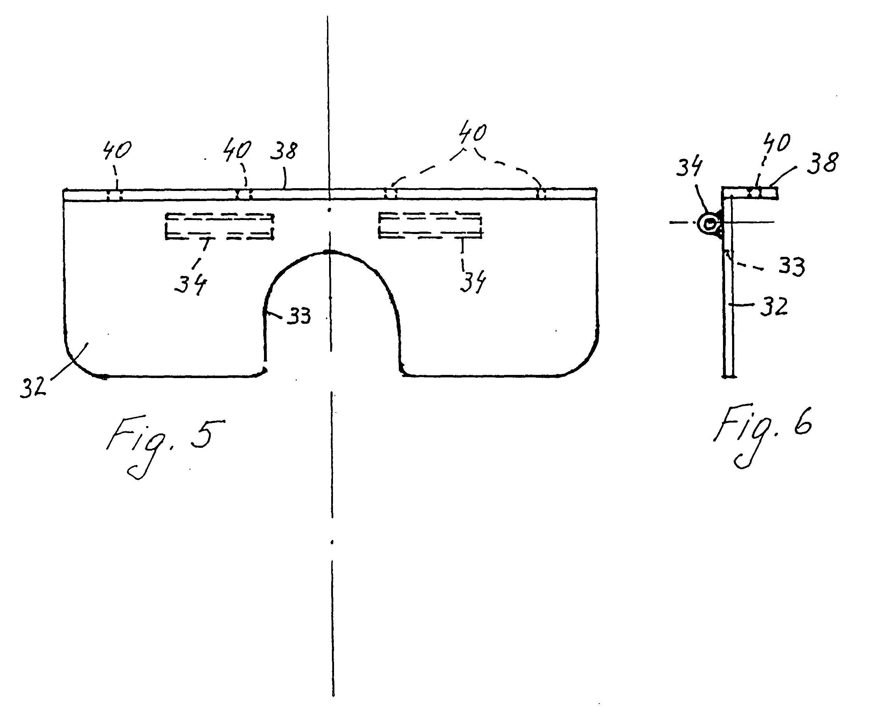

Eine Abschirmplatte 32 (Fig. 5, 6) mit einer den Strahldurchtritt gestattenden, nach unten offenen, der Durchbrechung 18 in der Basisplatte 16 gegenüberliegenden, mittigen Ausnehmung 33 ist mit Lagerhülsen 34 versehen, die zusammen mit einem Scharnierbolzen 36 (Fig. 2) und den Lagerhülsen 30 zur verschwenkbaren Verbindung zwischen der Basisplatte 16 und der Abschirmplatte 32 mit horizontalem Abstand voneinander dienen.

Am oberen horizontalen Rand ist die Abschirmplatte 32 unter Bildung einer Leiste 38 abgewinkelt, wobei nach der Montage der Abschirmplatte 32 diese Leiste in der von der Basisplatte 16 abgewandten Richtung von der Abschirmplatte 32 vorspringt, wie in Fig. 2 zu sehen ist. Die Leiste 38 ist mit Bohrungen 40 versehen, denen deckungsgleich Bohrungen 42 an einer sie untergreifenden, in Gegenrichtung von einer Prallplatte 44 vorspringenden Leiste 46 zugeordnet sind, so daß die Abschirmplatte 32 und die Prallplatte 44 mit horizontalem Abstand voneinander miteinander verbunden werden können. Die Leiste 46 ist breiter als die Leiste 38, so daß sie über die Leiste 38 mit einem Abschnitt 48 hervorsteht, von dem aus in der Längsmitte der Leiste 46 ein aus einem U-Profil mit zwei parallelen Seitenschenkeln 50 und 52 und zwei zwischen diesen eingefügten Lageraugen 54 und 56 bestehender Lagerbock 58 vertikal nach oben ragt. Zwischen den Lageraugen 54 und 56 sind die Seitenschenkel 50 und 52 mit jeweils einer Aussparung 57 versehen, deren Bedeutung nachfolgend noch erläutert wird.

Dieser Lagerbock dient zur drehbahren Lagerung einer Gewindespindel 60, die am oberen Ende mit einer Handkurbel 62 versehen ist und am unteren Ende durch eine aufgeschraubte Sicherungsmutter 64 axial festgelegt ist, wobei die Sicherungsmutter 64 und die Gewindespindel 60 von einem Sicherungsstift 66 diametral durchquert werden. Zwischen den beiden Lageraugen 54 und 56 trägt die Gewindespindel eine Mutter 68 (Fig. 10, 11), die mit zwei koaxial nach entgegengesetzten Seiten radial vorspringenden Gewindezapfen 70 und 72, sowie einem dritten, sich dazu rechtwinklig erstreckenden, ebenfalls radialen Gewindezapfen 74 versehen ist, wobei den Gewindezapfen 70 - 74 Endmuttern 76, 78 und 80 zugeordnet sind.

Die Gewindezapfen 70 und 72 ragen durch die Aussparungen 57 über den Umriß des Lagerbocks 58 nach außen und dienen jeweils zur schwenkbaren Lagerung zweier seitlich am Lagerbock 58 vorbeigeführter, paralleler Lenker 82 und 84, deren andere Enden an einem der deckungsgleichen Bohrungspaare 26 mittels eines diese und die Lenker 82 und 84 durchquerenden Gelenkbolzens 86 verschwenkbar mit den Leisten 24a und 24b an der Basisplatte 16 verbunden sind, so daß die Winkelstellung der Abschirmplatte 32 und der mit ihr verbundenen Prallplatte 44 relativ zur Basisplatte 16 durch eine Schwenkung um den Scharnierbolzen 36 verändert wird, wenn die durch die Lenker 82 und 84 an einer Drehung gehinderte Mutter 68 durch Drehung der Gewindespindel 60 vertikal auf der Gewindespindel 60 verstellt wird. Das Ausmaß der Winkeländerung bei einer Bewegung der Mutter 68 über ihren ganzen Verstellbereich kann durch Veränderung der Winkelstellung der Lenker 82 und 84 beeinflußt werden, weshalb in den Leisten 24a und 24b mehrere Bohrungspaare 26 zur Auswahl vorgesehen sind.

Auf dem Gewindezapfen 74 ist ein Hebel 86 mittels einer an ihm angebrachten Gewindehülse 87 mittig festgeschraubt, der an seinen beiden Enden jeweils gelenkig mit Lenkern 88a bzw. 88b verbunden ist, die ihrerseits zur Bildung jeweils einer Kniehebelanordnung gelenkig an Lenker 90a bzw. 90b angeschlossen sind, die zu diesem Zweck an ihrem einem Ende mit zwei einen Abstand voneinander aufweisenden, wahlweise zur Gelenkbildung auswählbaren Bohrungen 92a und 92b bzw. 94a und 94b versehen sind.

An der Prallplatte 44 sind beiderseits ihrer vertikalen Mitte zwei Lageraugen 96a und 96b deckungsgleich zu zwei Bohrungen 98a bzw. 98b in der Prallplatte 44 angebracht, die jeweils Achsen 100a bzw. 100b aufnehmen, die fest mit den von den Bohrungen 92a und 94a bzw. 92b und 94b abgelegenen Enden der Lenker 90a bzw. 90b verbunden sind. Auf der von den Lenkern 90a bzw. 90b abgewandten Seite der Prallplatte 44 verlaufen die Achsen 100a und 100b unterhalb der Leiste 46 in einem vom oberen Ende der Abschirmplatte 32 abgedeckten Bereich. Dort sitzen auf den Achsen 100a bzw. 100b jeweils Leitflügel 102a bzw. 102b, die ebenfalls verdrehfest mit diesen Achsen verbunden sind, weshalb eine Schwenkbewegung der Lenker 90a bzw. 90b auf die Leitflügel 102a bzw. 102b übertragen wird.

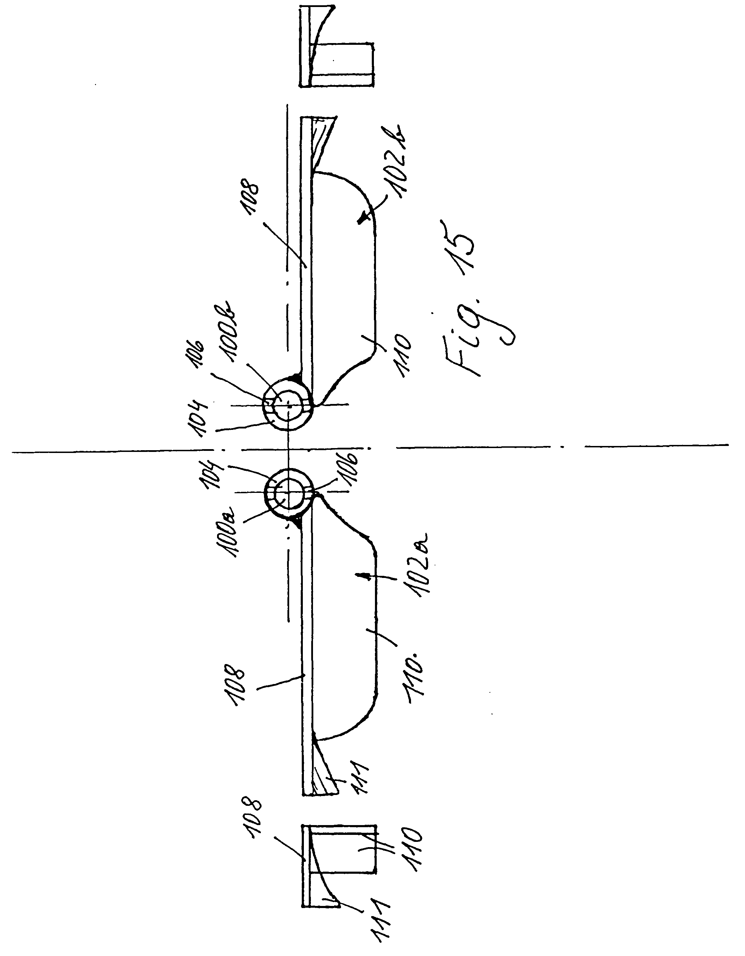

Die Leitflügel 102a und 102b sind genauer in Fig. 15 gezeigt. Sie sind spiegelbildlich identisch, weshalb sich die Beschreibung auf den Leitflügel 102a beschränkt. Sie besitzen an einem Ende jeweils ein Auge 104 zur Aufnahme einer der Achsen 100a bzw. 100b, wobei eine Diametralbohrung 106 zur Aufnahme eines Sicherungsstiftes zugleich der drehfesten Verbindung mit den Achsen 100a bzw. 100b dient. An die Augen 104 schließt sich jeweils eine den Abstand zwischen der Abschirmplatte 32 und der Prallplatte 44 abdeckende Platte 108 an, von der aus der Abschirmplatte 32 benachbart eine Leitschürze 110 nach unten gezogen ist, die mit zunehmendem Abstand von der vertikalen Längsmittelebene ihren Abstand von der Abschirmplatte 32 vergrößert. An dem von den Augen 104 abgewandten, äußeren Ende der Platten 108 ist eine Endschürze 111 angeordnet, die von der Ebene der Platte 108 allmählich gegen das der Prallplatte 44 benachbarte Eck der Platte 108 nach unten gezogen ist und der Begrenzung des von der Prallplatte 44 abgelenkten, aus dem Behälter austretenden Flüssigkeitsstrahls dient.

Um die Breite des Geländestreifens einzustellen, auf den die aus dem Behälter austretende und auf die Prallplatte 44 auftreffende Flüssigkeit verteilt wird, wird die Mutter 68 mittels der Handkurbel 62 vertikal verstellt. In der oberen Endstellung der Mutter 62 steht die Prallplatte 44 etwa vertikal, d.h. etwa senkrecht zu dem aus der Ausmündung 15a austretenden Strahl, und die Leitflügel 102a und 102b liegen horizontal unter der Leiste 46.

Wird die Mutter 68 abwärts bewegt, drücken die Lenker 88a und 88b die Lenker 90a und 90b in Richtung auf eine horizontale Stellung. Diese Bewegung wird auf die Leitflügel 102a und 102b übertragen, die dadurch in eine nach außen schräg abwärts verlaufende Lage verschwenkt werden, deren Neigungswinkel zunimmt, je weiter die Mutter 68 nach unten bewegt wird. Zugleich wird der Neigungswinkel der Lenker 82 und 84 steiler, wodurch die Prallplatte 44 in Fig. 2 gegen den Uhrzeigersinn verschwenkt wird, so daß ihre Unterkante den Abstand zur Basisplatte 16 vergrößert. Durch Abwärtsbewegung der Mutter 68 wird demnach einerseits die Breite des Flüssigkeitsstrahls begrenzt und andererseits wird der Ablenkwinkel des Flüssigkeitsstrahls an der Prallplatte 44 verändert und der abprallende Strahl weiter nach unten gerichtet, was einer Konzentration der Flüssigkeitsmenge an den Rändern des Strahls entgegenwirkt und jederzeit eine im wesentlichen homogene Flüssigkeitsdichte in dem auf dem Boden auftreffenden Strahl herbeiführt.

Bei der in der Zeichnung dargestellten und vorstehend beschriebenen Ausführungsform sind die Verschwenkung der Leitflügel 102a und 102b einerseits und die Veränderung des Anstellwinkels der Prallplatte 44 bezüglich des Flüssigkeitsstrahls aus der Ausmündung 15a andererseits miteinander gekoppelt. Dies ist jedoch nicht zwingend nötig. Die vorbezeichneten Einstellungen könnten bei einer passenden Abwandlung der Stelltriebe auch voneinander gesondert, z.B. nacheinander, eingerichtet werden, um eine gewünschte Breite der Güllestreifens mit homogener Gülleverteilung zu erhalten, wofür z. B. auch passende zusammengehörende Markierungen an den Stelltrieben zur Erleichterung der Einstellarbeit vorgesehen werden könnten.

## Patentansprüche

1. Flüssigkeitsverteiler, insbesondere Flüssigmistverteiler, der im Anschluß an eine im wesentlichen horizontal gerichtete Ausmündung eines fahrbaren Flüssigkeitsbehälters, insbesondere Güllebehälters, an einer behälterfesten Montagefläche montierbar ist, mit einer Prallplatte (44), die von der unter Druck aus der Ausmündung austretenden Flüssigkeit beaufschlagt ist, und einer Abschirmplatte (32), die im wesentlichen parallel zur Prallplatte (44) dieser mit Abstand gegenüberliegt, wobei die Prallplatte (44) gemeinsam mit der Abschirmplatte (32) zur Veränderung der Breite des gegen den Boden gerichteten Flüssigkeitsstrahls um eine horizontale, quer zur Richtung des aus der Ausmündung austretenden Strahls verlaufende Schwenkachse verstellbar ist und eine Strahlbegrenzungseinrichtung (102a, 102b), die den Bereich des aus der Ausmündung austretenden Strahls nach oben abdeckt,
**dadurch gekennzeichnet, daß** die Strahlbegrenzungseinrichtung (102a, 102b) zwischen der Prallplatte (44) und der Abschirmplatte (32) angeordnet und von oben her in den Bereich des aus der Ausmündung austretenden Strahls absenkbar ist und den Bereich seitlich mit zunehmender Absenkung zunehmend begrenzt.

2. Flüssigkeitsverteiler nach der Anspruch 1, **dadurch gekennzeichnet, daß** die Strahlbegrenzungsvorrichtung aus zwei Leitflügeln (102a, 102b) besteht, die symmetrisch zur vertikalen Längsmittelebene des Verteilers angeordnet und mit ihren einander zugewandten Enden jeweils um eine zur Prallplatte (44) senkrecht verlaufende Achse (100a, 100b) gegenläufig verstellbar sind.

3. Flüssigkeitsverteiler nach Anspruch 2, **dadurch gekennzeichnet, daß** die Leitflügel (102a, 102b) zumindest am Rand ihrer voneinander abgewandten Enden mit nach unten vorspringenden Endschürzen (111) versehen sind.

4. Flüssigkeitsverteiler nach Anspruch 3, **dadurch gekennzeichnet, daß** die Höhe der Endschürzen (111) in Richtung auf das der Prallplatte (44) zugewandte äußere Eck der Leiflügel (102a, 102b) zunimmt.

5. Flüssigkeitsverteiler nach einem der Ansprüche 2 bis 4, **dadurch gekennzeichnet, daß** die Leitflügel (102a, 102b) an ihrer Unterseite mit einer nach unten gezogenen, sich mit zunehmender Enfernung von der Längsmittelebene zugleich von der Abschirmplatte (32) entfernenden Leitschürze (110) versehen sind.

6. Flüssigkeitsverteiler nach einem der vorhergehenden Ansprüche, **dadurch gekennzeichnet, daß** die Abschirmplatte (32) mit einer den Durchtritt des Flüssigkeitsstrahls gestattenden, der Ausmündung zugeordneten Ausnehmung (33) versehen ist.

7. Flüssigkeitsverteiler nach Anspruch 6, **dadurch gekennzeichnet, daß** die Ausnehmung (33) nach unten geöffnet ist.

8. Flüssigkeitsverteiler nach einem der vorhergehenden Ansprüche, **dadurch gekennzeichnet, daß** an der der Ausmündung zugewandten Seite eine im wesentlichen vertikal und quer zur Strahlrichtung verlaufende Basisplatte (16) vorgesehen ist, die eine der Ausmündung zugeordnete Durchbrechung (18) aufweist.

9. Flüssigkeitsverteiler nach einem der vorhergehenden Ansprüche, **dadurch gekennzeichnet, daß** zwischen der Prallplatte (44) und der Strahlbegrenzungsvorrichtung (102a, 102b) eine Getriebeverbindung besteht, nach deren Bewegungsgesetz die Unterkante der Prallplatte (44) durch Schwenkung um die horizontale, quer zur Richtung des aus der Ausmündung austretenden Strahls verlaufende Achse (36) ihren Abstand von der Ausmündung vergrößert, wenn die Strahlbegrenzungsvorrichtung (102a, 102b) sich senkt, und diesen Abstand verringert, wenn die Strahlbegrenzungsvorrichtung sich hebt.

10. Güllefahrzeug mit einem Güllebehälter der eine im wesentlichen horizontal gerichtete Ausmündung aufweist, an die ein Flüssigkeitsverteiler nach einem der Ansprüche 1 bis 9 anschließt.

## Claims

1. Liquid distributor, particularly liquid manure distributor mountable behind a substantially horizontally directed outlet of a travelling liquid container, particularly slurry container, on a mounting surface fixed relative to the container, with a deflector plate (44), which is impacted by the liquid emerging under pressure from the outlet, and a shielding plate (32), which lies substantially parallel to the deflector plate (44) opposed to it at a distance, whereby the deflector plate (44) together with the shielding plate (32) is adjustable about a horizontal pivot axis running transverse to the direction of the jet emerging from the outlet in order to alter the width of the liquid jet directed against the ground, and a jet limiting device (102a, 102b) which covers from above the range of the jet emerging from the outlet, **characterised in that** the jet limiting device (102a, 102b) is arranged between the deflector plate (44) and the shielding plate (32) and can be lowered from above into the range of the jet emerging from the outlet and increasingly limits the range laterally with increasing lowering.

2. Liquid distributor according to Claim 1, **characterised in that** the jet limiting device comprises two guide vanes (102a, 102b) arranged symmetrically to the vertical longitudinal mid-plane of the distributor and adjustable in opposition with their mutually facing ends, each about an axis (100a, 100b) running perpendicular to the deflector plate (44).

3. Liquid distributor according to Claim 2, **characterised in that** the guide vanes (102a, 102b) are provided, at least on the edge of their mutually averted ends, with end fins (111) protruding downwards.

4. Liquid distributor according to Claim 3, **characterised in that** the height of the end fins (111) increases in the direction towards the outer corner of the guide vanes (102a, 102b) facing towards the deflector plate (44).

5. Liquid distributor according to one of the claims 2 to 4, **characterised in that** the guide vanes (102a, 102b) are provided on their underside with a guide fin (110) drawn downwards, increasing in distance from the shielding plate (32) with increasing separation from the longitudinal mid-plane.

6. Liquid distributor according to one of the previous claims **characterised in that** the shielding plate (32) is provided with a cut-out (33) corresponding to the outlet, permitting the passage of the liquid jet.

7. Liquid distributor according to Claim 6, **characterised in that** the cut-out (33) is open underneath.

8. Liquid distributor according to one of the previous claims, **characterised in that** on the side facing the outlet, a base plate (16) running substantially vertically and transverse to the jet direction is provided, having a perforation (18) corresponding to the outlet.

9. Liquid distributor according to one of the previous claims, **characterised in that** between the deflector plate (44) and the jet limiting device (102a, 102b) exists a gearbox link according to whose law of motion the lower edge of the deflector plate (44) by pivoting about the horizontal axis (36) running transverse to the direction of the jet emerging from the outlet increases its separation from the outlet if the jet limiting device (102a, 102b) lowers itself, and reduces this separation if the jet limiting device raises itself.

10. Slurry vehicle with a slurry container having a substantially horizontally directed outlet, behind which is a liquid distributor according to one of the claims 1 to 9.

## Revendications

1. Epandeur de liquides, en particulier épandeur de lisier, pouvant être monté à la suite d'un orifice de sortie d'orientation essentiellement horizontale d'un réservoir à liquides mobile, en particulier d'un réservoir à lisier, sur une surface de montage solidaire du réservoir, comprenant une plaque de déviation (44) alimentée par le liquide sortant sous pression de l'orifice de sortie et une plaque de protection (32) essentiellement parallèle à la plaque de déviation (44) et placée à distance en regard de celle-ci, la plaque de déviation (44) ensemble avec la plaque de protection (32), afin de modifier la largeur du jet liquide dirigé contre le sol, étant mobile autour d'un axe de pivotement horizontal perpendiculaire au sens du jet sortant de l'orifice de sortie, et comprenant un dispositif limiteur de jet (102a, 102b) couvrant vers le haut la zone du jet sortant de l'orifice de sortie, **caractérisé en ce que** le dispositif limiteur de jet (102a, 102b) est disposé entre la plaque de déviation (44) et la plaque de protection (32) et peut être abaissé par le haut dans la zone du jet sortant de l'orifice de sortie et **en ce qu'**il limite progressivement ladite zone sur le côté au fur et à mesure qu'il s'abaisse.

2. Epandeur de liquides selon la revendication 1, **caractérisé en ce que** le dispositif limiteur de jet est composé de deux ailes de guidage (102a,102b) disposées symétriquement par rapport au plan médian longitudinal vertical de l'épandeur et mobiles en sens contraire, par leurs extrémités opposées l'une à l'autre, autour de respectivement un axe (100a, 100b) s'étendant verticalement à la plaque de déviation (44).

3. Epandeur de liquides selon la revendication 2, **caractérisé en ce que** les ailes de guidage (102a, 102b), au moins au bord de leurs extrémités opposées l'une à l'autre, sont munies de jupes d'extrémité (111) saillant vers le bas.

4. Epandeur de liquides selon la revendication 3, **caractérisé en ce que** la hauteur des jupes d'extrémité (111) augmente en direction du coin extérieur tourné vers la plaque de déviation (44) des ailes de guidage (102a, 102b).

5. Epandeur de liquides selon l'une des revendications 2 à 4, **caractérisé en ce que** les ailes de guidage (102a, 102b), au niveau de leur face inférieure, sont munies d'une jupe de guidage (110) tirée vers le bas s'éloignant avec l'éloignement progressif du plan médian longitudinal en même temps de la plaque de protection (32).

6. Epandeur de liquides selon l'une des revendications précédentes, **caractérisé en ce que** la plaque de protection (32) est munie d'une cavité (33) affectée à l'orifice de sortie et permettant le passage du jet liquide.

7. Epandeur de liquides selon la revendication 6, **caractérisé en ce que** la cavité (33) est ouverte vers le bas.

8. Epandeur de liquides selon l'une des revendications précédentes, **caractérisé en ce qu'**il est prévu sur le côté dirigé vers l'orifice de sortie une plaque de base (16) s'étendant essentiellement verticalement et perpendiculairement au sens de jet, qui comprend une rupture (18) affectée à l'orifice de sortie.

9. Epandeur de liquides selon l'une des revendications précédentes, **caractérisé en ce qu'**il existe entre la plaque de déviation (44) et le dispositif limiteur de jet (102a, 102b) un mécanisme à engrenage, selon la loi du mouvement duquel le bord inférieur de la plaque de déviation (44), par pivotement autour de l'axe horizontal perpendiculaire au sens du jet sortant de l'orifice de sortie, augmente sa distance par rapport à l'orifice de sortie lorsque le dispositif limiteur de jet (102a, 102b) s'abaisse et diminue cette distance lorsque le dispositif limiteur de jet se lève.

10. Véhicule à lisier avec un réservoir à lisier comprenant un orifice de sortie d'orientation essentiellement horizontale suivi d'un épandeur de liquides selon l'une des revendications 1 à 9.
